Europäisches Patentamt

European Patent Office

Office européen des brevets

(11) Veröffentlichungsnummer: **0 383 010**
**A2**

## (12) EUROPÄISCHE PATENTANMELDUNG

(21) Anmeldenummer: 90100419.2

(22) Anmeldetag: **10.01.90**

(51) Int. Cl.⁵: **F24F 3/14**

(30) Priorität: **17.02.89 DE 3904791**

(43) Veröffentlichungstag der Anmeldung:
**22.08.90 Patentblatt 90/34**

(84) Benannte Vertragsstaaten:
**AT BE CH DE DK ES FR GB GR IT LI LU NL SE**

(71) Anmelder: **Zander Aufbereitungstechnik GmbH**
**Im Teelbruch 86**

**D-4300 Essen 18 - Kettwig(DE)**

(72) Erfinder: **Priess, Günter**
**Kimplerstrasse 98**
**D-4150 Krefeld(DE)**

(74) Vertreter: **Patentanwaltsbüro Cohausz & Florack**
**Schumannstrasse 97**
**D-4000 Düsseldorf 1(DE)**

(54) **Warmregenerierende Adsorptionsanlage für feuchte, gasförmige Medien.**

(57) Die Erfindung bezieht sich auf eine warmregenerierende Adsorptionsanlage für feuchte, gasförmige Medien mit zwei parallel zueinander angeordneten, im Wechsel von adsorbierendem Betrieb auf regenerierenden Betrieb umschaltbaren Adsorbern (1,2). Für die Umschaltung von adsorbierenden auf regenerierenden Betrieb ist eine Schaltventilkombination vorgesehen, mit der unter Beibehaltung der Strömungsrichtung in einem entweder zu erwärmende Umgebungsluft für die Regenerierung oder kühlende Umgebungsluft für die Phase nach der Regenerierung ansaugenden Gebläse eine Umschaltung von regenerierendem Betrieb auf adsorbierenden Betrieb möglich ist.

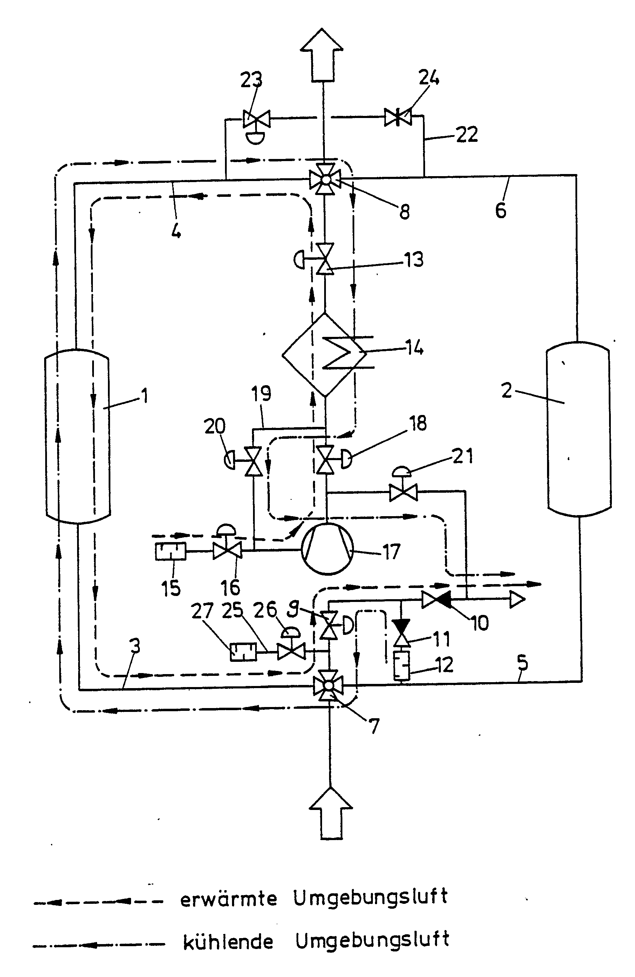

Für die Zusammenfassung ist die Figur bestimmt.

— - — - — erwärmte Umgebungsluft

— · — · — kühlende Umgebungsluft

EP 0 383 010 A2

## Warmregenerierende Adsorptionsanlage für feuchte; gasförmige Medien

Die Erfindung bezieht sich auf eine warmregenerierende Adsorptionsanlage für feuchte, gasförmige Medien mit zwei Adsorbern, die im Wechsel von adsorbierenden Betrieb auf regenerierenden Betrieb mittels in ihren Zu- und Abfuhrleitungen angeordneten Ventilen umschaltbar sind, wobei für den regenerierenden Betrieb ein Umluft ansaugendes Gebläse vorgesehen ist, das in einer ersten Phase die Umluft über eine Heizeinrichtung dem Adsorber unter Druck und mit zur Strömungsrichtung im adsorbierenden Betrieb entgegengesetzter Strömungsrichtung und in einer anschließenden zweiten Phase als Kühlluft mit Unterdruck und umgekehrter Strömungsrichtung zuführt.

Adsorptionsanlagen dieser Art sind bekannt (Zeitschrift "Produktion" 29.9.1988, Nr. 39, S. 26). Bei einer solchen Adsorptionsanlage dient die Kühlung nach dem regenerierenden Betrieb mittels erwärmter Umluft dazu, das Adsorptionsmittel möglichst schnell wieder auf volle Aktivität zu bringen. Würde die kühlende Luft mit der gleichen Strömungsrichtung wie die für die Regenerierung erwärmte Luft durch den Adsorber geschickt, käme es nach Umschaltung auf Adsorberbetrieb zu dem sogenannten "Temperaturpeak" bzw. "Taupunktpeak". Für die Trocknung würde das bedeuten, daß sie nicht sofort voll wirksam werden kann. Um diesen Nachteil zu vermeiden, ist bei der bekannten Adsorptionsanlage vorgesehen, daß die Kühlluft den regenerierten Adsorber in entgegengesetzter Strömungsrichtung und mit Unterdruck durchströmt. Dies geschieht dadurch, daß das Gebläse durch Umkehrung seiner Drehrichtung von Druckbetrieb auf Saugbetrieb umgeschaltet wird. Diese Art der Umschaltung läßt sich nicht bei allen Gebläsen verwirklichen und hat bei solchen Gebläsen, bei denen die Umschaltung möglich ist, eine Minderung des Wirkungsgrades zur Folge.

Der Erfindung liegt die Aufgabe zugrunde, eine Adsorptionsanlage der eingangs genannten Art zu schaffen, bei der der Wirkungsgrad des Gebläses im regenerierenden Betrieb sowohl in der ersten Phase, in der die erwärmte Umgebungsluft unter Druck über den Adsorber geschickt wird, als auch in der zweiten Phase, in der die Kühlluft durch den Adsorber gesaugt wird, gleich gut ist.

Diese Aufgabe wird erfindungsgemäß dadurch gelöst, daß das Gebläse mit einer Schaltventilkombination ausgerüstet ist, die unter Beibehaltung der Strömungsrichtung im Gebläse von der Zufuhr der zu erwärmenden Umgebungsluft über die eingeschaltete Heizeinrichtung zum Adsorber und Ableitung der erwärmten, feuchtigkeitsbeladenen Umgebungsluft von dem Adsorber in die Atmosphäre in der ersten Phase des regenerierenden Betriebes auf die Zufuhr von kühlender Umgebungsluft zum Adsorber und Ableitung der Umgebungsluft vom Adsorber über die ausgeschaltete Heizeinrichtung in die Atmosphäre umschaltbar ist.

Nach einer Ausgestaltung der Erfindung ist der Eingang des Ventilators einerseits über ein erstes Schaltventil mit einer ersten Ansaugöffnung für Umgebungsluft und andererseits über ein zweites Schaltventil mit einem Anschluß der Heizeinrichtung verbunden, während der Ausgang des Ventilators einerseits über ein drittes Schaltventil mit dem einen Anschluß der Heizeinrichtung und andererseits über ein viertes Schaltventil mit dem Auslaß verbunden ist und am Eingang des Adsorbers für die kühlende Luft in der zweiten Phase des regenerierenden Betriebes über ein fünftes Schaltventil mit der einen oder einer zweiten Ansaugöffnung verbunden ist.

Bei der Erfindung wird beim regenerierenden Betrieb von Druckbetrieb auf Saugbetrieb die Betriebsweise des Ventilators selbst nicht verändert. Allein durch die Ventilkombination wird erreicht, daß die Umschaltung von Druckbetrieb auf Saugbetrieb mit Strömungsumkehr im zu regenerierenden Adsorber erreicht wird. Das bedeutet, daß in beiden Phasen des regenerierenden Betriebes mit optimalen Wirkungsgrad gearbeitet wird.

Im folgenden wird die Erfindung anhand einer Zeichnung näher erläutert, die ein Prinzip einer Adsorptionsanlage darstellt.

Die Adsorptionsanlage weist zwei wechselweise im regenerierenden und adsorbierenden Betrieb betriebene Adsorber 1,2 auf, deren Ein- und Ausgangsleitungen 3-6 zu Vierwegeventilen 7,8 führen. Über das Vierwegeventil 7 ist zu entfeuchtende Druckluft zuführbar, während über das Ventil 8 die entfeuchtete Luft abführbar ist. Die Ventile 7,8 sind so einstellbar, daß im adsorbierenden Betrieb die Adsorber von unten nach oben und im regenerierenden Betrieb mit erwärmter Luft von oben nach unten durchstömt werden. Der vierte Anschluß des Vierwegeventils 7 führt über ein Schaltventil 9 und ein Einwegeventil 10 in die Atmosphäre. An der Verbindungsleitung zwischen den Ventilen 9,10 ist über ein weiteres Einwegeventil 11 ein mit einem schalldämmenden Filter ausgestattete Ansaugöffnung 12 für Umgebungsluft angeschlossen.

Am vierten Anschluß des Vierwegeventils 8 ist über ein Schaltventil 13 eine Heizeinrichtung 14 für Umgebungsluft angeschlossen. Die Umgebungsluft wird über eine mit einem schalldämmenden Filter ausgerüstete Ansaugöffnung 15 und ein Schaltventil 16 von einem Sauggebläse 17 angesaugt und über ein Schaltventil 18 der Heizeinrichtung 14 zugeführt. Parallel zum Eingang des Sauggebläses 17 und der Verbindungsleitung zwischen der Heizeinrichtung 14 und dem Schaltventil 18 liegt ein Bypass 19 mit einem Schaltventil 20. Der Ausgang des Sauggebläses 17 führt über ein Schaltventil 21 in die Atmosphäre.

Für die zwischen der Umschaltung von dem einen Adsorber 1 auf den anderen Adsorber 2 einzuschaltende Druckaufbauphase ist an den Ein- und Ausgangsleitungen 4 und 6 ein das Ventil 8 überbrückender Bypass 22 mit einem Schaltventil 23 und einem Mengenregelventil 24 angeschlossen. An der Verbindungsleitung zwischen dem Ventil 7 und dem Schaltventil 9 ist eine Ausgangsleitung 25 mit einem Schaltventil 26 und einem Schalldämpfer 27 angeschlossen.

Aufgrund der Anordnung der verschiedenen Schaltventile 9, 16,18,20,21 ist es möglich, in den beiden Phasen des regenerierenden Betriebes in der ersten Phase mit erwärmter Luft unter Druck in der einen Strömungsrichtung und in der zweiten Phase mit Kühlluft unter Unterdruck in der anderen Strömungsrichtung den Adsorber 1 zu beaufschlagen, wobei die Strömungsrichtung im Gebläse 17 in beiden Phasen gleich ist. In der Zeichnung ist für den Adsorber 1 der regenerierende Betrieb in den beiden Phasen dargestellt, und zwar bedeuten die gestrichelten Linien die Strömung der erwärmten Luft in der ersten Phase und die strichpunktierten Linien die Strömung der Kühlluft in der zweiten Phase.

Während der Regenerierung des Adsorbers 1 ist der Adsorber 2 durch die Stellung der Ventile 7 und 8 auf adsorbierenden Betrieb geschaltet. Da der adsorbierende Betrieb unter Überdruck erfolgt, ist es erforderlich, vor einer Umschaltung von adsorbierenden auf regenerierenden Betrieb eine Zwischenphase einzuschalten. Dazu wird zunächst das Schaltventil 23 geöffnet, so daß ein Druckausgleich zwischen den Leitungen 4 und 6 erfolgt. Nach Druckausgleich wird das Schaltventil 26 geöffnet und der Überdruck im System abgebaut. Danach werden die Schaltventile 23,26 wieder geschlossen. Danach kann der Adsorber 2 im regenerierenden Betrieb und der regenerierte Adsorber 1 im adsorbierenden Betrieb betrieben werden.

## Ansprüche

1. Warmregenerierende Adsorptionsanlage für feuchte, gasförmige Medien mit zwei Adsorbern (1,2), die im Wechsel von adsorbierenden Betrieb auf regenerierenden Betrieb mittels in ihren Zu- und Abfuhrleitungen (3-6) angeordneten Ventilen (7,8) umschaltbar sind, wobei für den regenerierenden Betrieb ein Umluft ansaugendes Gebläse (17) vorgesehen ist, das in einer ersten Phase die Umluft über eine Heizeinrichtung (14) dem Adsorber (1) unter Druck und mit zur Strömungsrichtung im adsorbierenden Betrieb entgegengesetzter Strömungsrichtung und in einer anschließenden zweiten Phase als Kühlluft mit Unterdruck und umgekehrter Strömungsrichtung zuführt, dadurch gekennzeichnet, daß das Gebläse (17) mit einer Schaltventilkombination (9,16,20,21) ausgerüstet ist, die unter Beibehaltung der Strömungsrichtung im Gebläse (17) von der Zufuhr der zu erwärmenden Umgebungsluft über die eingeschaltete Heizeinrichtung (14) zum Adsorber (1) und Ableitung der erwärmten, feuchtigkeitsbeladenen Umgebungsluft von dem Adsorber (1) in die Atmosphäre in der ersten Phase des regenerierenden Betriebs auf die Zufuhr von kühlender Umgebungsluft zum Adsorber (1) und Ableitung der Umgebungsluft vom Adsorber (1) über die ausgeschaltete Heizeinrichtung (14) in die Atmosphäre umschaltbar ist.

2. Adsorptionsanlage nach Anspruch 1, dadurch gekennzeichnet, daß der Eingang des Ventilators (17) einerseits über ein erstes Schaltventil (16) mit einer ersten Ansaugöffnung (15) für Umgebungsluft und andererseits über ein zweites Schaltventil (20) mit einem Anschluß der Heizeinrichtung (14) verbunden ist, daß der Ausgang des Ventilators (17) einerseits über ein drittes Schaltventil (18) mit dem einen Anschluß der Heizeinrichtung (14) und andererseits über ein viertes Schaltventil (21) mit einem Auslaß verbunden ist und daß der Eingang des Adsorbers (1) für die in der zweiten Phase des regenerierenden Betriebes zuzuführende kühlende Umgebungsluft über ein Schaltventil (9) mit der einen oder einer weiteren Ansaugöffnung für Umgebungsluft verbunden ist.

erwärmte  Umgebungsluft

kühlende  Umgebungsluft